# EUROPÄISCHE PATENTSCHRIFT

(11) **EP 3 964 400 B1**
(45) Veröffentlichungstag und Bekanntmachung des Hinweises auf die Patenterteilung: **12.06.2024**
(21) Anmeldenummer: 21189599.0
(22) Anmeldetag: 04.08.2021
(51) Int. Cl.: B60R 13/02, B60J 10/82, B60R 11/02, B62D 25/06

(54) **DACHANORDNUNG FÜR EIN FAHRZEUG, FAHRZEUG**
ROOF ASSEMBLY FOR A VEHICLE, VEHICLE
AGENCEMENT DE TOIT POUR UN VÉHICULE, VÉHICULE

(30) Priorität: 31.08.2020 DE 102020210940
(43) Veröffentlichungstag der Anmeldung: 09.03.2022
(73) Patentinhaber: VOLKSWAGEN AG, 38440 Wolfsburg (DE)
(72) Erfinder: Brandin, Marko, 38440 Wolfsburg (DE)

(56) Entgegenhaltungen:
- DE-C1- 10 163 111
- US-A- 6 019 411

## Beschreibung

Die Erfindung betrifft eine Dachanordnung für ein Fahrzeug, insbesondere für ein Kraftfahrzeug, mit einem Fahrzeugdach, das zumindest einen Dachrahmen, in welchem eine Dachöffnung ausgebildet ist, und zumindest ein Glasdachelement, insbesondere ein Panoramaglasdach-oder Glasschiebedachelement, das sich über die Dachöffnung erstreckt, aufweist, wobei der Dachrahmen zumindest einen sich quer zur Längserstreckung des Fahrzeugdachs erstreckenden Querträger aufweist, und mit einem Formhimmel, der sich zumindest derart über den Querträger erstreckt, dass der Formhimmel randseitig dem Glasdachelement gegenüberliegt.

Weiterhin betrifft die Erfindung ein Fahrzeug, insbesondere ein Kraftfahrzeug, mit einer wie obenstehend beschrieben ausgebildeten Dachanordnung.

Dachanordnungen der eingangs genannten Art sind aus dem Stand der Technik bereits bekannt. So offenbart beispielsweise die Offenlegungsschrift DE 11 54 360 A eine Dachanordnung für ein Fahrzeug, die einen an dem Fahrzeugdach angeordneten oder ausgebildeten Querträger aufweist, der dazu ausgebildet ist, weitere Elemente, die von einem Benutzer beziehungsweise von einem Fahrgast nutzbar sind, zu tragen. So weist der Querträger eine Vielzahl von Aufhänge- und Befestigungsvorrichtungen, Aufnahmestellen für elektrische Geräte und/oder Einzelteile von Klima- und Heizungsanlagen auf.

Die Patentschrift US 6 019 411 A offenbart eine Dachanordnung gemäß dem Oberbegriff des Anspruchs 1. Die Patentschrift DE 101 63 111 C1 offenbart ein Kraftfahrzeug mit einer Bedieneinheit, die als Flachbauteil in einen Schiebehimmel des Kraftfahrzeugs integriert ist.

Der Erfindung liegt die Aufgabe zugrunde, eine verbesserte Dachanordnung zu schaffen, die insbesondere eine vorteilhafte Anbringung von einer durch einen Benutzer betätigbaren Bedieneinheit, wie beispielsweise zur Bedienung einer Klimaanlage oder Musikanlage, bietet.

Die der Erfindung zugrundeliegende Aufgabe wird durch eine Dachanordnung mit den Merkmalen des Anspruchs 1 gelöst. Diese hat den Vorteil, dass die Bedieneinheit einerseits für Benutzer gut erreichbar an dem Fahrzeugdach angeordnet ist, und andererseits von Fahrzeuginsassen nicht als störend empfunden wird, ohne dass dabei die eigentliche Konstruktion des Querträgers beeinträchtigt wird. Damit werden relevante Merkmale der Dachanordnung beibehalten und dennoch eine vorteilhafte Integration der Bedieneinheit ermöglicht.

Die erfindungsgemäße Dachanordnung mit den Merkmalen des Anspruchs 1 sieht hierzu vor, dass die von dem Benutzer betätigbare Bedieneinheit in der Kehle zwischen Glasdachelement und Formhimmel angeordnet ist. Die Bedieneinheit liegt somit in dem Bereich, in welchem der Formhimmel auf das Glasdachelement trifft. Diese schließen zusammen eine Kehle ein, deren Öffnungswinkel insbesondere zwischen 125° bis 45° liegt. Die Bedieneinheit liegt somit auch an dem Glasdachelement an oder ist zumindest diesem derart zugeordnet, dass sie sich insbesondere von dem Formhimmel zu dem Glasdachelement hin erstreckt. Damit liegt die Bedieneinheit zwar an dem Querträger an, steht jedoch nicht von diesem in den Fahrzeuginnenraum vor. Vielmehr erstreckt sich die Bedieneinheit bevorzugt parallel zu dem Glasdachelement, sodass die Bedieneinheit zwar einen Abschnitt des Glasdachelements verdeckt, jedoch für den Benutzer einfach zu erreichen ist und nicht beispielsweise nach unten in den Fahrgastinnenraum vorsteht.

Vorzugsweise ist die Bedieneinheit in Längserstreckung des Querträgers gesehen mittig an diesem angeordnet. Dadurch ist die Bedieneinheit von allen Fahrzeuginsassen gleichermaßen gut zu erreichen und bietet somit zum einen einen hohen Komfort und darüber hinaus aufgrund der Symmetrie auch optische Vorteile.

Weiterhin ist erfindungsgemäß vorgesehen, dass die Bedieneinheit einen an dem Fahrzeugdach befestigten Halter und eine Bedieneinrichtung aufweist, die miteinander verbunden sind, insbesondere fest miteinander verbunden sind. Die Bedieneinheit ist somit insgesamt mehrteilig ausgebildet, wobei der Halter zur Befestigung der Bedieneinrichtung an dem Fahrzeugdach dient. Dadurch ist eine einfache Montage kostengünstig realisierbar.

Besonders bevorzugt ist der Halter an dem Glasdachelement festgeklebt. Damit ist die Bedieneinrichtung insgesamt an dem Glasdachelement befestigt. Somit bedarf es keinem zusätzlichen Befestigungsmittel an dem Querträger, wodurch dessen Struktur in keiner Weise beeinträchtigt wird. Darüber hinaus kann die Bedieneinrichtung dadurch auch beispielsweise nachträglich an dem Fahrzeugdach angeordnet werden. Die Bedieneinrichtung kann vorteilhafterweise für einen Batteriebetrieb und für eine drahtlose Kommunikation mit einem Fahrzeugsteuergerät ausgebildet sein, sodass die Bedieneinrichtung nachträglich ohne einen zusätzlichen Verkabelungsaufwand an dem Glasdachelement in der Kehle zwischen Glasdachelement und Formhimmel befestigbar ist.

Gemäß einer weiteren Ausführungsform der Erfindung ist der Halter bevorzugt an dem Querträger verschraubt. Dadurch ist der Halter mechanisch direkt an dem Querträger befestigt. Dadurch kann auf eine Verklebung an dem Glasdachelement verzichtet werden. Insbesondere ist der Halter entweder an dem Glasdachelement verklebt oder an dem Querträger verschraubt. Gemäß einer weiteren Ausführungsform ist der Halter an dem Glasdachelement fest verklebt und an dem Querträger verschraubt. Durch die Verschraubung an dem Querträger ist der Halter besonders sicher an dem Fahrzeugdach gehalten. Insbesondere ist ein unerwünschtes Lösen jederzeit sicher verhindert. Durch die Verschraubung des Halters an dem Querträger ist ohnehin eine Verbindung durch den Formhimmel hindurch zu dem Querträger notwendig, durch welche beispielsweise ein oder mehrere Befestigungsschrauben geführt sind. Damit ist auch das Verkabeln der Bedieneinrichtung durch beispielsweise eines oder mehrerer Kabel, die durch den Formhimmel hindurchgeführt werden und in den Querträger führen, ohne großen Mehraufwand erreichbar.

Weiterhin ist bevorzugt vorgesehen, dass der Halter zumindest eine Rastvorrichtung zur formschlüssigen Aufnahme und Halterung der Bedieneinrichtung aufweist. Dies bietet den Vorteil, dass zunächst der Halter an dem Fahrzeugdach befestigt wird und anschließend durch ein einfaches Einstecken oder Einrasten die Bedieneinrichtung an dem Halter angeordnet wird.

Weiterhin ist erfindungsgemäß vorgesehen, dass die Bedieneinheit eine Dekorblende aufweist, die an dem Halter befestigt ist und die Kehle mit der darin angeordneten Bedieneinrichtung überdeckt, insbesondere ausfüllt, wobei die Dekorblende eine Öffnung für die Bedieneinrichtung zu deren Bedienung aufweist, Insbesondere füllt die Bedieneinrichtung die Öffnung der Dekorblende aus, sodass sie insbesondere bündig mit dieser abschließt. Dadurch, dass die Dekorblende die Kehle überdeckt und insbesondere ausfüllt, ist die Kehle im Bereich der Bedieneinheit nicht erkennbar. Dadurch werden beispielsweise auch eine Verklebung oder Verschraubung der Bedieneinheit an dem Glasdachelement beziehungsweise an dem Querträger verdeckt und vor äußeren Einflüssen geschützt.

Weiterhin ist bevorzugt vorgesehen, dass der Querträger zwei benachbarten Öffnungen in dem Dachrahmen zugehörig ist, sodass der Querträger mit der Bedieneinheit zwischen zwei Glasdachelementen liegt. Dabei ist die Bedieneinheit zweckmäßigerweise einem der beiden Glasdachelemente zugeordnet, beispielsweise an diesem festgeklebt. Diese Ausbildung hat insbesondere den Vorteil, dass die Dachanordnung ein besonders großes Panoramaglasdach bietet, das durch zwei Panoramaglasdachelemente oder durch ein durchgehendes Panoramaglasdachelement gebildet wird, zwischen denen der Querträger liegt beziehungsweise welches sich über den Querträger hinweg erstreckt.

Besonders bevorzugt ist der Formhimmel an dem Querträger und/oder an dem jeweiligen Glasdachelement durch Verkleben, Verklipsen und/oder Verschrauben befestigt. Dadurch ist eine sichere Halterung des Formhimmels an dem Querträger beziehungsweise an dem Glasdachelement, also letztendlich an dem Fahrzeugdach, gewährleistet.

Weiterhin ist bevorzugt vorgesehen, dass sich der Formhimmel von dem einen Glasdachelement über den Querträger bis zu dem anderen Glasdachelement erstreckt, sodass der Querträger insgesamt durch den Formhimmel abgedeckt beziehungsweise überdeckt ist. Dadurch ergeben sich neben optischen Vorteilen ein sicherer Schutz des Querträgers vor äußeren Einflüssen sowie ein verbesserter Schutz der Fahrzeuginsassen vor Verletzungen, die durch den Querträger selbst entstehen könnten.

Gemäß einer bevorzugten Ausführungsform der Erfindung ist die Dekorblende an dem Halter und/oder an dem Formhimmel der Bedieneinheit durch Verschraubung, Verklipsung oder Verklebung gehalten. Dadurch ist auch eine einfache Montage und gegebenenfalls Demontage der Dekorblende an Halter und/oder Formhimmel gewährleistet.

Das erfindungsgemäße Fahrzeug mit den Merkmalen des Anspruchs 11 zeichnet sich durch die erfindungsgemäße Dachanordnung aus. Es ergeben sich dabei die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: ein Fahrzeug mit einer vorteilhaften Dachanordnung in einer perspektivischen Draufsicht,
- Figur 2: eine vereinfachte Schnittdarstellung der Dachanordnung gemäß einem ersten Ausführungsbeispiel, und
- Figur 3: eine vereinfachte Schnittdarstellung der Dachanordnung gemäß einem zweiten Ausführungsbeispiel.

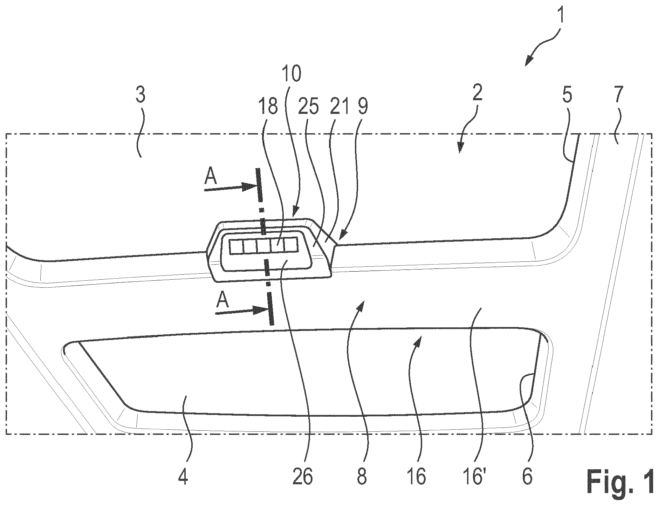

Figur 1 zeigt in einer perspektivischen Draufsicht die einem Fahrgastraum eines Fahrzeugs zugewandte Innenseite einer Dachanordnung 1 eines Kraftfahrzeugs. Die Dachanordnung 1 weist ein Fahrzeugdachs 2, auf, das als Panoramaglasdach ausgebildet ist und dazu zwei Glasdachelemente 3 und 4 aufweist, die Öffnungen 5, 6 in dem Fahrzeugdach 2 überdecken beziehungsweise ausfüllen. Das Fahrzeugdach 2 weist dazu einen Dachrahmen 7 auf, in welchem die beiden Öffnungen 5, 6 ausgebildet sind. Die Öffnungen 5, 6 beziehungsweise die Glasdachelemente 3, 4 sind in Fahrzeuglängsrichtung gesehen hintereinanderliegend angeordnet. Zwischen den Glasdachelementen 3, 4 beziehungsweise den Öffnungen 5, 6 ist ein Quersteg 8 des Dachrahmens 7 ausgebildet, der sich also quer zur Längserstreckung des Fahrzeugdachs 2 beziehungsweise des Kraftfahrzeugs erstreckt. Der Quersteg 8 liegt somit zwischen den beiden Panoramaglasdachelementen 3, 4 und unterteilt somit das gesamte Panoramaglasdach. Die Glasdachelemente 3, 4 liegen dabei insbesondere oberhalb oder zumindest im Wesentlichen oberhalb des Querstegs 8, sodass letzterer von den Glasdachelementen 3, 4 in den Innenraum des Kraftfahrzeugs 1 beziehungsweise nach unten vorsteht. Dadurch ist eine Kehle 9 zwischen dem Quersteg 8 und den Glasdachelementen 3 gebildet. Auf der gegenüberliegenden Seite ist eine entsprechende Kehle zwischen dem Quersteg 8 und dem Glasdachelement 4 gebildet.

Dieser Kehle 9 ist in vorteilhafter Weise eine Bedieneinheit 10 derart zugeordnet, dass sie in der Kehle 9 liegt und damit direkt an den Quersteg 8 sowie das Glasdachelement 3 angrenzt. Die Bedieneinheit 10 ist dabei schmaler ausgebildet als der Quersteg 8, sodass sich die Bedieneinheit 10 über eine begrenzte Länge, die kürzer ist als die Länge des Querstegs 8, entlang des Querstegs 8 erstreckt. Dabei ist die Bedieneinheit 10 insbesondere mittig in Längserstreckung des Querstegs 8 gesehen in der Kehle 9 angeordnet.

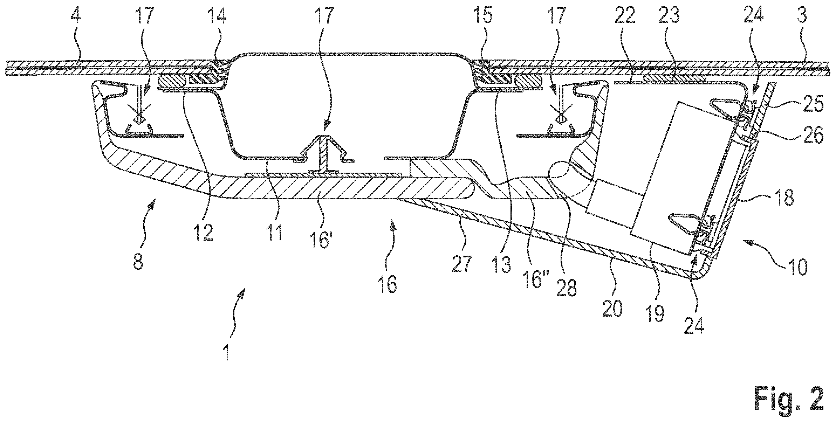

Mit Bezug auf Figur 2 soll nunmehr ein erstes Ausführungsbeispiel der vorteilhaften Dachanordnung 1 näher erläutert werden. Figur 2 zeigt dazu die Dachanordnung 1 in einer vereinfachten Längsschnittdarstellung durch den Quersteg 8 gemäß der Linie A-A aus Figur 1.

Der Quersteg 8 weist einen Querträger 11 auf, der fest mit der übrigen Kraftfahrzeugkarosserie verbunden ist. Der Querträger 11 weist randseitig Auflagen 12 beziehungsweise 13 auf, auf welchen die Glasdachelemente 3 beziehungsweise 4 jeweils aufliegen. Zwischen den Glasdachelementen 3 und 4 und dem Querträger 11 sind außerdem elastisch verformbare Dichtelemente 14, 15 eingesetzt, die beispielsweise jeweils rahmenförmig das jeweilige Glasdachelement 3, 4 umgeben und zur dichtenden Anlage des jeweiligen Glasdachelements 3, 4 an dem Dachrahmen 7 dienen. Der Querträger 11 ist vorzugsweise hohl ausgebildet, sodass er gewichtssparend ist. An dem Querträger 11 ist ein Formhimmel 16 angeordnet, der gemäß dem vorliegenden Ausführungsbeispiel zweiteilig ausgebildet ist. Ein erstes Teil 16' erstreckt sich dabei über fast die gesamte Breite des Querträgers 11 und über dessen gesamte Länge, wie auch in Figur 1 gezeigt. Ein zweites Teil 16" erstreckt sich ebenfalls über die gesamte Länge des Querträgers 11 und ist dem anderen Glasdachelement 3 zugeordnet. Einer ersten Seitenrand des Teils 16" liegt dabei unterhalb des Teils 16' und ein zweiter von dem ersten Seitenrand abgewandter Seitenrand ist dem Glasdachelement 3 derart zugeordnet, dass das Formteil 16 mit diesem zweiten Seitenrand dem Glasdachelement 3 direkt gegenüberliegt und optional auf der dem Innenraum des Fahrzeugs zugewandten Unterseite des Glasdachelements 3 aufliegt.

Zur Befestigung des Formhimmels 16 an dem Fahrzeugdach 2 beziehungsweise an dem Querträger 11 sind gemäß dem vorliegenden Ausführungsbeispiel mehrere Klipsverbindungen 17 vorgesehen, sodass der Formhimmel 16 durch ein Einklipsen auf einfache Art und Weise an dem Fahrzeugdach befestigbar ist. Optional ist der Fahrzeughimmel 16 außerdem einteilig ausgebildet.

Wie in Figur 2 weiterhin erkennbar, weist die Bedieneinheit 10 eine Bedieneinrichtung 18 auf, die beispielsweise ein berührungsempfindliches Display, haptisch betätigbare Schalter oder dergleichen aufweist, durch deren Betätigung der Benutzer insbesondere unterschiedliche Funktionen des Kraftfahrzeugs nutzen kann, einen Halter 19, an welchem die Bedieneinrichtung 18 angeordnet ist, sowie eine Dekorblende 20, die die Bedieneinrichtung 18 sowie den Halter 19 im Wesentlichen überdeckt und damit insbesondere mit Seitenwänden 21, wie in Figur 1 gezeigt, die Kehle 9 ausfüllt.

Der Halter 19 ist als Halterrahmen ausgebildet, der vorliegend einen dem Glasdachelement 3 zugewandten Halteabschnitt 22 aufweist. Der Halteabschnitt 22 ist durch einen Klebstoff 23 an dem Glasdachelement 3 durch Verkleben befestigt.

Die Bedieneinrichtung 18 ist insbesondere in den Halter 19 eingesteckt und dort beispielsweise mittels einer oder mehrerer Rastvorrichtungen formschlüssig arretiert. Die Blende 20 weist im Bereich der Bedieneinrichtung 18 eine Aussparung auf, die von der Bedieneinrichtung 18 insbesondere vollständig ausgefüllt wird, sodass die Bedieneinrichtung 18 zumindest im Wesentlichen bündig mit der Außenseite der Dekorblende 20 abschließt. Die Blende 20 selbst ist insbesondere durch Klipsverbindungen 24 an dem Halter 19 befestigt. Die Blende 20 weist dabei einen ersten Abschnitt 25 auf, der sich über die Bedieneinrichtung 18 erstreckt und die Öffnung 26 für die Bedieneinrichtung 18 aufweist, und einen zweiten Abschnitt 27, der sich in Richtung der dem Fahrzeuginnenraum zugewandten Unterseite des Formhimmels 16 erstreckt. Insbesondere überragt der Abschnitt 27 bereichsweise die Unterseite, um einen vorteilhaften optischen Abschluss mit dem Formhimmel 16 zu erhalten, wie in Figuren 1 und 2 gezeigt.

Der Formhimmel 16, insbesondere das Teil 16" weist zumindest eine Aussparung 28 auf, durch welche Anschlusskabel der Bedieneinrichtung 18 in den Querträger 11 geführt sind, um dort beispielsweise durch die Fahrzeugkarosserie hindurch mit einem Steuergerät oder elektrischen Einrichtung des Kraftfahrzeugs verbunden zu werden.

Durch die vorteilhafte Anordnung der Bedieneinheit 10 in der Kehle 9 ist diese von einem Benutzer gleichermaßen gut zu erreichen und beeinträchtigt dabei nicht die Stabilität des Querträgers 11 selbst. Darüber hinaus ist die Bedieneinheit 10 auch gut nachträglich montierbar.

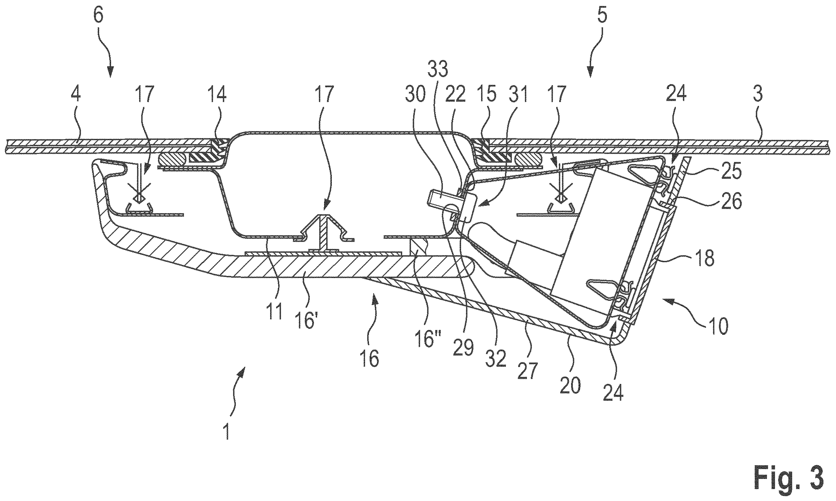

Figur 3 zeigt ein alternatives Ausführungsbeispiel der Dachanordnung 1, wobei aus den vorhergehenden Figuren bereits bekannte Elemente mit den gleichen Bezugszeichen versehen sind und insoweit auf die obenstehende Beschreibung verwiesen wird. Im Folgenden soll im Wesentlichen nur auf die Unterschiede eingegangen werden. Im Unterschied zu dem vorhergehenden Ausführungsbeispiel ist der Halter 19 nunmehr nicht mit dem Glasdachelement 3 verklebt, sondern durch eine Verschraubung mit dem Querträger 11 direkt mechanisch verbunden. Dazu ist in einer Seitenwand des Querträgers 11 eine Öffnung 29 ausgebildet, durch welche der Schraubenschaft 30 einer Befestigungsschraube 31 hindurchgeführt ist. Auf der Innenseite des Querträgers 11 ist der Schraubenschaft 30 insbesondere in das Schraubgewinde einer Schraubenmutter 33 oder dergleichen eingeschraubt, die fest auf der Innenseite des Querträgers 11 angeordnet ist. Optional ist die Schraubenmutter 33 auf der Innenseite des Querträgers 11 festgeschweißt, sodass die Befestigungsschraube 31 in die Schraubenmutter zur Befestigung des Halters 19 in die Schraubenmutter einschraubbar ist. Zwischen einem Schraubenkopf 32 und dem Querträger 11 ist der Halter 19 mit dem Halteabschnitt 22 dann verspannt gehalten.

Durch die Verschraubung wird eine besonders hohe Festigkeit der Bedieneinheit 10 an dem Querträger 11 gewährleistet. Optional ist zusätzlich die Verklebung 23 vorgesehen.

### Bezugszeichenliste

- 1: Dachanordnung
- 2: Fahrzeugdach
- 3: Glasdachelement
- 4: Glasdachelement
- 5: Öffnung
- 6: Öffnung
- 7: Dachrahmen
- 8: Quersteg
- 9: Kehle
- 10: Bedieneinheit
- 11: Querträger
- 12: Auflage
- 13: Auflage
- 14: Dichtelement
- 15: Dichtelement
- 16: Formhimmel
- 16': Teil
- 16": Teil
- 17: Klipsverbindung
- 18: Bedieneinrichtung
- 19: Halter
- 20: Dekorblende
- 21: Seitenwand
- 22: Halteabschnitt
- 23: Klebstoff
- 24: Klipsverbindung
- 25: Abschnitt
- 26: Öffnung
- 27: Abschnitt
- 28: Aussparung
- 29: Öffnung
- 30: Schraubenschaft
- 31: Befestigungsschraube
- 32: Schraubenkopf
- 33: Schraubenmutter

## Patentansprüche

1. Dachanordnung (1) für ein Fahrzeug, insbesondere für ein Kraftfahrzeug, mit einem Fahrzeugdach (2), das zumindest einen Dachrahmen (7), in welchem zumindest eine Öffnung (5, 6) ausgebildet ist, und zumindest ein Glasdachelement (3, 4), insbesondere ein Panoramaglasdach- oder Glasschiebedachelement, das sich über die Öffnung (5, 6) erstreckt, aufweist, wobei der Dachrahmen (7) zumindest einen sich quer zur Längserstreckung des Fahrzeugdachs (2) erstreckenden Querträger (11) aufweist, und mit einem Formhimmel (16), der sich zumindest derart über den Querträger (11) erstreckt, dass der Formhimmel (16) randseitig dem Glasdachelement (3, 4) gegenüberliegt, wobei eine von einem Benutzer betätigbare Bedieneinheit (10) des Fahrzeugs in der Kehle (9) zwischen Glasdachelement (3) und Formhimmel (16) angeordnet ist, und wobei die Bedieneinheit (10) einen Halter (19), eine Bedieneinrichtung (18) und eine Dekorblende (20) aufweist, **dadurch gekennzeichnet, dass** die Bedieneinrichtung (18) an dem Halter (19) angeordnet und mit dem Halter (19) verbunden ist, und dass die Dekorblende (20) an dem Halter (19) befestigt ist und die Kehle (9) mit der darin angeordneten Bedieneinrichtung (18) überdeckt, wobei die Dekorblende (20) eine Öffnung für die Bedieneinrichtung (18) aufweist.

2. Dachanordnung nach dem vorhergehenden Anspruch, **dadurch gekennzeichnet, dass** die Bedieneinheit (10), in Längserstreckung des Querträgers (11) gesehen, mittig an diesem angeordnet ist.

3. Dachanordnung nach einem der vorhergehenden Ansprüche, **dadurch gekennzeichnet, dass** der Halter (19) und die Bedieneinrichtung (18) fest miteinander verbunden sind.

4. Dachanordnung nach einem der vorhergehenden Ansprüche, **dadurch gekennzeichnet, dass** der Halter (19) an dem Glasdachelement (3) festgeklebt ist.

5. Dachanordnung nach einem der vorhergehenden Ansprüche, **dadurch gekennzeichnet, dass** der Halter (19) an dem Querträger (11) verschraubt ist.

6. Dachanordnung nach einem der vorhergehenden Ansprüche, **dadurch gekennzeichnet, dass** der Halter (19) zumindest eine Rastvorrichtung zur formschlüssigen Aufnahme und Halterung der Bedieneinrichtung (18) aufweist.

7. Dachanordnung nach einem der vorhergehenden Ansprüche, **dadurch gekennzeichnet, dass** der Querträger (11) zwei benachbarten Öffnungen (5, 6) zugehörig ist, sodass der Querträger (11) mit der Bedieneinheit (10) zwischen zwei Glasdachelementen (3, 4) liegt.

8. Dachanordnung nach einem der vorhergehenden Ansprüche, **dadurch gekennzeichnet, dass** der Formhimmel (16) an dem Querträger (11) und/oder an dem jeweiligen Glasdachelement (3, 4) durch Verkleben, Verklipsen, und/oder Verschrauben befestigt ist.

9. Dachanordnung nach einem der vorhergehenden Ansprüche, **dadurch gekennzeichnet, dass** sich der Formhimmel (16) von dem einen Glasdachelement (3) über den Querträger (11) bis zu dem anderen Glasdachelement (4) erstreckt.

10. Dachanordnung nach einem der vorhergehenden Ansprüche, **dadurch gekennzeichnet, dass** die Dekorblende (20) an dem Halter (19) und/oder an dem Formhimmel (16) durch Verschraubung, Verklipsung oder Verklebung gehalten ist.

11. Fahrzeug, insbesondere Kraftfahrzeug, mit einer Dachanordnung (1) nach einem der vorhergehenden Ansprüche.

## Claims

1. Roof arrangement (1) for a vehicle, in particular for a motor vehicle, having a vehicle roof (2) which comprises at least one roof frame (7), in which at least one opening (5, 6) is formed, and at least one glass roof element (3, 4), in particular a panoramic glass roof or glass sliding roof element, which extends over the opening (5, 6), the roof frame (7) comprising at least one cross member (11) extending transversely to the longitudinal extension of the vehicle roof (2), and having a shaped headliner (16) which extends at least over the cross member (11) in such a way that the edge of the shaped headliner (16) is opposite the glass roof element (3, 4), an operating unit (10) of the vehicle which can be operated by a user being arranged in the channel (9) between the glass roof element (3) and the shaped headliner (16), and the operating unit (10) comprising a retainer (19), an operating device (18) and a decorative panel (20), **characterized in that** the operating device (18) is arranged on the retainer (19) and is connected to the retainer (19), **and in that** the decorative panel (20) is fastened to the retainer (19) and covers the channel (9) with the operating device (18) arranged therein, the decorative panel (20) comprising an opening for the operating device (18).

2. Roof arrangement according to the preceding claim,
**characterized in that** the operating unit (10) is arranged centrally on the cross member (11) viewed in the longitudinal extension of the latter.

3. Roof arrangement according to any of the preceding claims,
**characterized in that** the retainer (19) and the operating device (18) are fixedly connected to one another.

4. Roof arrangement according to any of the preceding claims,
**characterized in that** the retainer (19) is fixedly glued to the glass roof element (3).

5. Roof arrangement according to any of the preceding claims,
**characterized in that** the retainer (19) is screwed onto the cross member (11).

6. Roof arrangement according to any of the preceding claims,
**characterized in that** the retainer (19) comprises at least one latching device for interlockingly receiving and retaining the operating device (18).

7. Roof arrangement according to any of the preceding claims,
**characterized in that** the cross member (11) is associated with two adjacent openings (5, 6), so that the cross member (11) with the operating unit (10) lies between two glass roof elements (3, 4).

8. Roof arrangement according to any of the preceding claims,
**characterized in that** the shaped headliner (16) is fastened to the cross member (11) and/or to the relevant glass roof element (3, 4) by gluing, clipping and/or screwing.

9. Roof arrangement according to any of the preceding claims, **characterized in that** the shaped headliner (16) extends from one glass roof element (3) via the cross member (11) to the other glass roof element (4).

10. Roof arrangement according to any of the preceding claims, **characterized in that** the decorative panel (20) is retained on the retainer (19) and/or on the shaped headliner (16) by screwing, clipping or gluing.

11. Vehicle, in particular motor vehicle, having a roof arrangement (1) according to any of the preceding claims.

## Revendications

1. Agencement de toit (1) pour un véhicule, en particulier pour un véhicule automobile, comportant un toit de véhicule (2) qui présente au moins un cadre de toit (7) dans lequel est conçue au moins une ouverture (5, 6), et au moins un élément de toit vitré (3, 4), en particulier un élément de toit vitré panoramique ou de toit vitré coulissant, qui s'étend sur l'ouverture (5, 6), dans lequel le cadre de toit (7) présente au moins une traverse (11) s'étendant transversalement à l'extension longitudinale du toit de véhicule (2), et comportant un ciel de pavillon (16) qui s'étend au moins sur la traverse (11) de telle sorte que le ciel de pavillon (16) est en regard de l'élément de toit vitré (3, 4) du côté du bord, dans lequel une unité de commande (10) du véhicule, pouvant être actionnée par un utilisateur, est disposée dans la niche (9) entre l'élément de toit vitré (3) et le ciel de pavillon (16), et dans lequel l'unité de commande (10) présente un support (19), un appareil de commande (18) et un panneau décoratif (20), **caractérisé en ce que** le l'appareil de commande (18) est disposé sur le support (19) et est relié au support (19), **et en ce que** le panneau décoratif (20) est fixé au support (19) et recouvre la niche (9) avec l'appareil de commande (18) disposé dans celle-ci, dans lequel le panneau décoratif (20) présente une ouverture pour l'appareil de commande (18).

2. Agencement de toit selon la revendication précédente,
**caractérisé en ce que** l'unité de commande (10), vue dans l'extension longitudinale de la traverse (11), est disposé au centre de celle-ci.

3. Agencement de toit selon l'une des revendications précédentes, **caractérisé en ce que** le support (19) et l'appareil de commande (18) sont reliés de manière fixe l'un avec l'autre.

4. Agencement de toit selon l'une des revendications précédentes, **caractérisé en ce que** le support (19) est collé à l'élément de toit vitré (3).

5. Agencement de toit selon l'une des revendications précédentes, **caractérisé en ce que** le support (19) est vissé sur la traverse (11).

6. Agencement de toit selon l'une des revendications précédentes, **caractérisé en ce que** le support (19) présente au moins un dispositif d'encliquetage destiné à recevoir et à maintenir par complémentarité de forme l'appareil de commande (18).

7. Agencement de toit selon l'une des revendications précédentes, **caractérisé en ce que** la traverse (11) est associée à deux ouvertures (5, 6) voisines, de sorte que la traverse (11) comportant l'unité de commande (10) se trouve entre deux éléments de toit vitrés (3, 4).

8. Agencement de toit selon l'une des revendications précédentes, **caractérisé en ce que** le ciel de pavillon (16) est fixé à la traverse (11) et/ou à l'élément de toit vitré (3, 4) respectif par collage, clipsage, et/ou vissage.

9. Agencement de toit selon l'une des revendications précédentes, **caractérisé en ce que** le ciel de pavillon (16) s'étend depuis l'un des éléments de toit vitré (3) jusqu'à l'autre élément de toit vitré (4) en passant par la traverse (11).

10. Agencement de toit selon l'une des revendications précédentes, **caractérisé en ce que** le panneau décoratif (20) est maintenu sur le support (19) et/ou sur le ciel de pavillon (16) par vissage, clipsage ou collage.

11. Véhicule, en particulier véhicule automobile comportant un agencement de toit (1) selon l'une des revendications précédentes.
